# EUROPÄISCHE PATENTSCHRIFT

(11) **EP 2 208 031 B1**
(45) Veröffentlichungstag und Bekanntmachung des Hinweises auf die Patenterteilung: **29.04.2015**
(21) Anmeldenummer: 08847198.2
(22) Anmeldetag: 07.11.2008
(51) Int. Cl.: G01F 23/288, G01N 23/08, G01T 1/28

(54) **RADIOMETRISCHES ZWEI-DRAHT-MESSGERÄT ZUR MESSUNG DES FÜLLSTANDS**
RADIOMETRIC TWO-WIRE MEASURING DEVICE FOR MEASUREMENT OF A FILL LEVEL
APPAREIL DE MESURE RADIOMÉTRIQUE À DEUX FILS POUR LA MESURE DU NIVEAU DE REMPLISSAGE

(30) Priorität: 09.11.2007 DE 102007053860
(43) Veröffentlichungstag der Anmeldung: 21.07.2010
(73) Patentinhaber: Endress+Hauser GmbH+Co. KG, 79689 Maulburg (DE)
(72) Erfinder: DAMM, Hartmut, 79331 Teningen (DE); RUMMEL, Jochen, 79618 Rheinfelden (DE); WEIDENBRUCH, Simon, 79539 Lörrach (DE); JIANG, Mingzehn, 79541 Lörrach (DE)
(74) Vertreter: Andres, Angelika Maria
(86) Internationale Anmeldenummer: PCT/EP2008/065138
(87) Internationale Veröffentlichungsnummer: WO 2009/060070

(56) Entgegenhaltungen:
- WO-A-2004/015646
- US-A- 6 014 100
- US-A1- 2004 061 537
- DAVID F SPENCER ET AL: "Using the Cockroft-Walton Voltage Multiplier With Small Photomultipliers" IEEE TRANSACTIONS ON NUCLEAR SCIENCE, IEEE SERVICE CENTER, NEW YORK, NY, US, Bd. 49, Nr. 3, 1. Juni 2002 (2002-06-01), XP011077659 ISSN: 0018-9499

## Beschreibung

Die Erfindung betrifft ein radiometrisches Messgerät mit einem radioaktiven Strahler und einem Detektor zur Erfassung einer am Ort des Detektors eintreffenden Strahlungsintensität.

Mittels radiometrischer Messgeräte sind physikalische Größen, wie z.B. ein Füllstand eines Füllgutes in einem Behälter, ein Über- oder Unterschreiten eines vorbestimmten Füllstandes eines Füllgutes in einem Behälter, oder eine Dichte eines Mediums messbar.

Radiometrische Messgeräte werden üblicherweise immer dann eingesetzt, wenn herkömmliche Messgeräte aufgrund besonders rauer Bedingungen am Messort nicht einsetzbar sind. Sehr häufig herrschen z.B. am Messort extrem hohe Temperaturen und Drücke oder es sind chemisch und/oder mechanisch sehr aggressive Umgebungseinflüsse vorhanden, die den Einsatz anderer Meßmethoden unmöglich machen.

In der radiometrischen Messtechnik wird ein radioaktiver Strahler, z.B. ein Co 60 oder Cs 137 Präparat, in einen Strahlenschutzbehälter eingebracht und an einem Messort, z.B. einem mit einem Füllgut gefüllten Behälter angebracht. Ein solcher Behälter kann z.B. ein Tank, ein Container, ein Rohr, ein Förderband oder eine beliebige andere Behälterform sein.

Der Strahlenschutzbehälter weist eine Ausnehmung auf, durch die die von dem zur Messung positionierten Strahler ausgesendete Strahlung durch eine Wand des Strahlenschutzbehälters hindurch ausgestrahlt wird.

Üblicherweise wird eine Abstrahlungsrichtung ausgewählt, bei der die Strahlung denjenigen Bereich des Behälters durchdringt, der messtechnisch erfasst werden soll. Auf der gegenüberliegenden Seite wird die durch eine Füllstands- bzw. Dichteänderung veränderte austretende Strahlungsintensität mit einem Detektor quantitativ erfasst. Die austretende Strahlungsintensität ist abhängig von der geometrischen Anordnung und der Absorption. Letztere ist bei der Füllstandsmessung und bei der Überwachung eines Über- oder Unterschreitens eines vorbestimmten Füllstandes abhängig von der Menge des Füllguts im Behälter und bei der Dichtemessung von der Dichte des Füllguts. Folglich ist die austretende Strahlungsintensität ein Maß für den aktuellen Füllstand, das Über- oder Unterschreiten des vorbestimmten Füllstandes bzw. die aktuelle Dichte des Füllguts im Behälter.

Als Detektor eignet sich z.B. ein Szintillationsdetektor mit einem Szintillator, z.B. einem Szintillationstab, und einem Photomultiplier. Der Szintillationsstab besteht aus einem speziellen Kunststoff, wie z.B. Polystyrol (PS) oder Polyvinyltoluol (PVT), der optisch sehr rein ist. Unter dem Einfluss von Gammastrahlung werden durch das Szintillationsmaterial Lichtblitze ausgestrahlt. Diese werden durch den Photomultiplier erfasst und in elektrische Impulse umgesetzt. Eine Impulsrate, mit der die Impulse auftreten ist abhängig von der Strahlungsintensität und somit ein Maß für die zu messende physikalische Größe, z.B. den Füllstand oder die Dichte. Szintillator und Photomultiplier sind üblicherweise in einem Schutzrohr, z.B. aus einem Edelstahl montiert.

Das Messgerät weist eine dem Detektor zugeordnete Messgerätelektronik auf, die ein der Impulsrate entsprechendes Ausgangssignal erzeugt. Die Messgerätelektronik umfasst üblicherweise eine Steuerung und einen Zähler. Die elektrischen Impulse werden gezählt und es wird eine Zählrate abgeleitet, anhand derer die zu messende physikalische Größe bestimmbar ist. Die Bestimmung der Messgröße erfolgt beispielsweise mittels eines in der Elektronik vorgesehenen Mikroprozessors und wird in Form eines Messsignals vom Messgerät zur Verfügung gestellt. Das Messsignal wird beispielsweise einer übergeordneten Einheit, z.B. speicherprogrammierbaren Steuerung (SPS), einem Prozeßleitsystem (PLS) oder einem Personalcomputer (PC), zugeführt.

In der Mess- und Regeltechnik werden bevorzugt Messgeräte mit nur einem Leitungspaar eingesetzt, über das sowohl die Versorgung des Messgeräts als auch die Signalübertragung erfolgt. Diese Geräte werden häufig als 2-Draht-Messgeräte bezeichnet.

Standardmäßig werden solche Messgeräte mit 10V bis 12 V gespeist und das Messgerät steuert einen über das Leitungspaar fließenden Strom in Abhängigkeit von einem momentanen Messwert. Das Messsignal ist bei diesen Messgeräten ein Signalstrom. Gemäß einem in der Mess- und Regeltechnik üblichen Standard wird der Signalstrom in Abhängigkeit von dem momentanen Messwert auf Werte zwischen einem minimalen Signalstrom von 4 mA und einem maximalen Signalstrom von 20 mA eingestellt. Sie bieten den Vorteil, dass sie aufgrund der geringen Energiezufuhr auch in explosionsgefährdeten Bereichen eingesetzt werden können, wo eine eigensichere Stromversorgung gefordert ist.

Da über das Leitungspaar sowohl die Versorgung als auch die Signalübertragung erfolgt steht dem Messgerät bei einer Speisespannung von 12 V und einem Signalstrom von 4 mA nur eine Leistung von 48 mW zur Verfügung.

Eine weitere Variante dieser 2-Draht-Messgeräte sind Messgeräte, die über eine Busleitung angeschlossen sind, über die sowohl die Versorgung des Messgeräts als auch die Signalübertragung erfolgt. Auch hierfür haben sich in der Industrie entsprechende Standards durchgesetzt, wie z.B. Profibus oder Foundation Fieldbus. Auch bei diesen 2-Draht-Busgeräten steht in der Regel nur wenig Energie für den Betrieb des Messgeräts zur Verfügung. Typischer Weise beträgt die Klemmenspannung hier 10 V und es fließt im mittel ein Strom von 9 mA. Die zur Verfügung stehende Energie liegt damit im Bereich von 90 mW.

Herkömmliche radiometrische Messgeräte benötigen jedoch, insb. für die Versorgung des Photomultipliers mit Hochspannung, sehr viel mehr Energie, als für 2-Draht-Messgeräte zur Verfügung steht.

Für den Betrieb des Photomultipliers ist eine Hochspannung von bis zu 2000 V erforderlich. Üblicherweise wird diese Hochspannung mittels eines DC/DC Wandlers erzeugt und über einen Spannungsteiler, z.B. eine Widerstandskette, auf die einzelnen Dynoden des Photomultipliers aufgeteilt. Hierzu werden vorzugsweise sehr hochohmige Spannungsteiler eingesetzt. Auch dann fließt jedoch ein Querstrom durch den Spannungsteiler, der gemessen am tatsächlichen Strombedarf des Photomultipliers zu erheblichen Energieverlusten führt.

Damit diese Messgeräte trotzdem in Verbindung mit den zuvor beschriebenen Standards einsetzbar sind, weisen diese Messgeräte üblicherweise zwei Leitungspaare auf. Über eines der Leitungspaare wird das Messgerät versorgt und über das andere fließt ein dem zuvor beschriebenen Standard entsprechender Signalstrom. Für die Versorgung ist es üblicherweise erforderlich an die normale Stromleitung, die z.B. 230 V Wechselspannung führt, einen Transformator und einen Gleichrichter anzuschließen, um z.B. eine Versorgungsspannung von üblicherweise 24 V Gleichspannung für das Messgerät bereitzustellen. Dies ist sehr aufwendig und es besteht die Gefahr, dass die beiden Leitungspaare beim Anschluss des Geräts vertauscht werden können.

Es gibt auch radiometrische Messgeräte auf dem Markt, bei denen der Detektor und die zugehörige Messgerätelektronik voneinander getrennte Elemente sind, die getrennt voneinander mit Energie versorgt werden.

In der D1 (WO2004/015646) ist eine Vorrichtung zur Bestimmung und/oder Überwachung einer physikalischen oder chemischen Größe im Prozess mit zumindest einem Feldgerät beschrieben, das über eine Datenverbindung mit einer entfernten Kontrollstelle Daten austauscht, und wobei zumindest eine mit dem Feldgerät elektrisch verbundene Brennstoffzelle vorgesehen ist, die den Energiebedarf des Feldgeräts zumindest teilweise deckt und die vom Feldgerät entfernt angeordnet ist. Die Vorrichtung wird über zumindest eine Brennstoffzelle mit Energie versorgt, die für eine Nachbetankung mit Brennstoff leicht zugänglich ist und die auch einen Einsatz des damit versorgten Feldgeräts in Ex-Zonen ermöglicht.

In der D2 (US 2004/061537) ist ein Zweidraht-Füllstandsmessgerät mit einer Stromversorgungsschaltung die über eine Ausgangsschaltkreis und Kontrollschaltkreis die notwendige Versorgungsenergie aus der Zweidraht-Stromschleife entnimmt und die eine Kaskadenpumpschaltung zur Erhöhung der Spannungsamplitude enthält.

In der D3 (David Spencer et al., IEEE transactions on nuclear science, vol. 49, No. 3, June 2002) ist ein Photomultiplier mit Hochspannungskaskadenschaltung in einem batteriebetriebenen Gerät beschrieben, die die Hochspannung in einem Gerät erzeugt.

Aus der D4 (US 6014100) ist eine Zweidraht-Messgerät zur Messung des Füllstandes mittels Mikrowellen mit einem Energiespeicher und einer Steuerung bzw. Regelung der aktiven Messphasen des Messgeräts bekannt geworden.

Es ist eine Aufgabe der Erfindung ein radiometrisches Messgerät anzugeben, dass über ein einziges Leitungspaar verfügt, über das sowohl die Versorgung des gesamten Messgeräts als auch die Übertragung des Messsignals erfolgt.

Hierzu besteht die Erfindung in einem radiometrisches Messgerät zur Messung einer physikalischen Messgröße eines in einem Behälter befindlichen Füllguts und zur Ausgabe eines Messsignals, das einem gemessenen Messwert der physikalischen Messgröße entspricht,
- das über ein einziges Leitungspaar verfügt, über das die Energieversorgung des gesamten Messgeräts erfolgt, und über das die Übertragung des Messsignals erfolgt, mit
- einem radioaktiven Strahler, der im Betrieb radioaktive Strahlung durch den Behälter sendet,
- einem Detektor mit einem Szintillator und einem Photomultiplier, der dazu dient durch den Behälter hindurchdringende von der zu messenden physikalischen Messgröße abhängige Strahlungsintensität zu detektieren und in ein elektrisches Ausgangssignal umzuwandeln,
- einer Messgerätelektronik, die dazu dient anhand des elektrischen Ausgangssignals des Detektors das Messsignal zu erzeugen und über das Leitungspaar zur Verfügung zu stellen,
- einem über das Leitungspaar gespeisten Energiespeicher,
- einer Steuerung,
   -- die in Abhängigkeit von einer über das Leitungspaar und den Energiespeicher
      zur Verfügung stehenden Energie Messphasen auslöst, während denen das
      Messgerät die physikalische Messgröße misst, und
   -- die den Photomultiplier ausschließlich während der Messphasen in Betrieb nimmt, wobei für den Betrieb des Photomultipliers erforderliche hohe Spannungen während der Messphasen mittels einer Hochspannungskaskade erzeugt werden.

Gemäß einer ersten Ausgestaltung ist eine an das Leitungspaar angeschlossene Messschaltung vorgesehen, die einen zur Verfügung stehenden Eingangsstrom und eine Eingangsspannung misst.

Gemäß einer zweiten Ausgestaltung ist eine Energiemessleitung vorgesehen, über die die im Inneren des Messgeräts über das Leitungspaar und den Energiespeicher zur Verfügung stehend Energie erfasst wird.

Gemäß einer Weiterbildung wird der Ladezustand des Energiespeichers erfasst, und die Messphasen werden in Abhängigkeit vom Ladezustand des Energiespeichers ausgelöst.

Gemäß einer weiteren Ausgestaltung umfasst die Messgerätelektronik einen Mikrocontroller, der während der Messpausen ausgeschaltet ist oder mit einer reduzierten Taktrate betrieben wird.

Gemäß einer Weiterbildung ist das Messsignal ein Signalstrom, der abhängig vom Messwert zwischen einem Minimalstrom und einem Maximalstrom variiert, wobei dem Minimalstrom derjenige Messwert zugeordnet ist, bei dem innerhalb eines vorgegebenen Messbereichs des Messgeräts die höchste Strahlungsintensität vorliegt.

Gemäß einer weiteren Weiterbildung ist das Messsignal ein Signalstrom, der abhängig vom Messwert zwischen einem Minimalstrom und einem Maximalstrom variiert, und das Verhältnis der Dauer der Messphasen zur Dauer der Messpausen nimmt mit ansteigendem Signalstrom zu.

Gemäß einer weiteren Weiterbildung ist das Messsignal ein Signalstrom, der abhängig vom Messwert zwischen einem Minimalstrom und einem Maximalstrom variiert, und die Dauer der Messphasen nimmt mit ansteigendem Signalstrom zu.

Gemäß einer Ausgestaltung ist das Messsignal ein Bussignal. Gemäß einer Weiterbildung ist ein Zähler vorgesehen, der vom Photomultiplier erzeugte Pulse zählt, und die Dauer der Messphasen ist derart bemessen, das während einer Messphase mindestens eine vorgegebene Mindestanzahl von Pulsen erzeugt wird.

Weiter besteht die Erfindung in einem Verfahren zum Betrieb eines erfindungsgemäßen radiometrischen Messgeräts, bei dem das Messsignal ein Signalstrom ist, der abhängig vom Messwert zwischen einem Minimalstrom und einem Maximalstrom variiert, und der Signalstrom beim Einschalten des Messgeräts auf den Maximalstrom geregelt wird.

Weiter besteht die Erfindung in einem Verfahren zum Betrieb eines erfindungsgemäßen radiometrischen Messgeräts, bei dem das Messsignal ein Signalstrom ist, der abhängig vom Messwert zwischen einem Minimalstrom und einem Maximalstrom variiert, und bei dem der Signalstrom im Kalibrierbetrieb auf einen Wert von mehr als 20,5 mA, insb. auf 22 mA, geregelt wird.

Weiter besteht die Erfindung in einem Verfahren zum Betrieb eines erfindungsgemäßen radiometrischen Messgeräts, bei dem
- das Messsignal ein Signalstrom ist, der abhängig vom Messwert zwischen
   einem Minimalstrom und einem Maximalstrom variiert,
- der Signalstrom beim vorliegen eines Gerätefehlers auf einen Fehlerwert von weniger als 3,8 mA, insb. auf 3,6 mA, geregelt wird, und
- die Steuerung während des Vorliegens eines Gerätefehlers eine für die Dauer des Vorliegens des Gerätefehlers anhaltende Messpause bewirkt.

Gemäß einer Ausgestaltung der Erfindung.liegt das Verhältnis der Dauer der Messphasen zur Dauer der Messpausen abhängig von der zur Verfügung stehenden Energie zwischen 20% und 100%.

Weiter besteht die Erfindung in einem Verfahren zum Betrieb eines erfindungsgemäßen Messgeräts, bei dem
- die zur Verfügung stehende Eingangspannung gemessen wird,
- die Eingangsspannung mit einer für einen Dauerbetrieb des Messgeräts erforderlichen Mindestspannung verglichen wird, und
- die Steuerung beim Überschreiten der Mindestspannung eine Messphase
   auslöst, die sie erst dann beendet, wenn die Eingangsspannung unter die Mindestspannung absinkt.

Die Erfindung und weitere Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
Fig. 1 zeigt schematisch ein an einem Behälter montiertes radiometrisches Messgerät;
Fig. 2 zeigt einen Schaltplan eines erfindungsgemäßen radiometrischen Messgeräts; und
Fig. 3 zeigt eine an Dynoden des Photomultipliers angeschlossene Hochspannungskaskade.

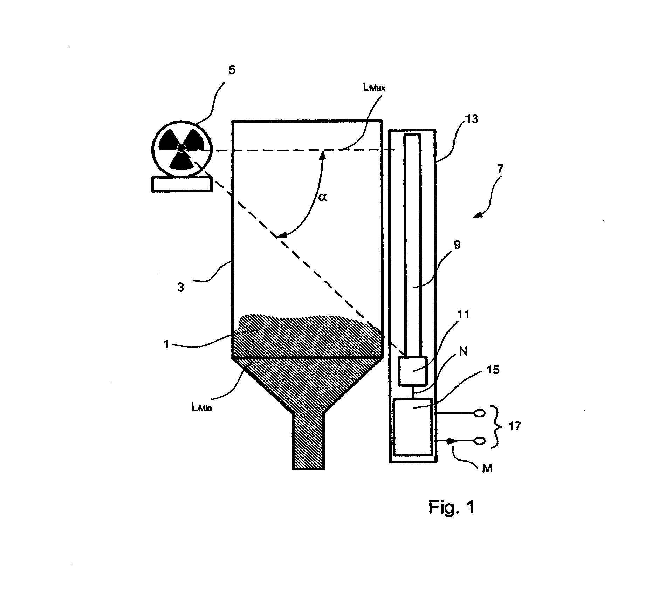

In Fig. 1 ist schematisch eine Messanordnung mit einem radiometrischen Messgerät dargestellt. Das radiometrisches Messgerät dient zur Messung einer physikalischen Messgröße und zur Ausgabe eines Messsignals M, das einem gemessenen Messwert der physikalischen Messgröße entspricht. Die Messanordnung umfasst einen mit einem Füllgut 1 befüllbaren Behälter 3. Das radiometrische Messgerät ist an dem Behälter 3 montiert. Die physikalische Messgröße ist z.B. ein Füllstand des Füllgutes 1 in dem Behälter 3 oder eine Dichte des Füllguts 1.

Das radiometrische Messgerät weist einen radioaktiven Strahler 5 auf, der im Betrieb radioaktive Strahlung durch den Behälter 3 sendet. Der Strahler 5 besteht z.B. aus einem Strahlenschutzbehälter in den ein radioaktives Präparat, z.B. ein Co 60 oder Cs 137 Präparat, eingebracht ist. Der Strahlenschutzbehälter weist eine Öffnung auf, durch die die Strahlung unter einem Öffnungswinkel α austritt und den Behälter 3 durchstrahlt.

Das Messgerät umfasst einen Detektor 7, der dazu dient durch den Behälter 3 hindurchdringende Strahlung aufzunehmen und eine von der zu messenden physikalischen Messgröße abhängige Strahlungsintensität zu detektieren und in ein elektrisches Ausgangssignal N umzuwandeln. Der Detektor 7 ist ein Szintillationsdetektor mit einem Szintillator 9, hier einem Szintillationstab, und einem daran angeschlossenen Photomultiplier 11. Szintillator 9 und Photomultiplier 11 befinden sich in einem in Fig. 1 dargestellten Schutzrohr 13, z.B. aus einem Edelstahl, das an einer dem Strahler 5 gegenüberliegenden Außenwand des Behälters 3 montiert ist. Auf den Szintillator 9 auftreffende radiometrische Strahlung erzeugt im Szintillationsmaterial Lichtblitze. Diese werden durch den Photomultiplier 11 erfasst und in elektrische Impulse umgesetzt, die als elektrisches Ausgangssignal N des Detektors 7 zur Verfügung stehen. Die Impulsrate, d.h. die Anzahl der pro Zeiteinheit detektierten elektrischen Impulse ist ein Maß für die Strahlungsintensität.

An den Detektor 7 ist eine Messgerätelektronik 15 angeschlossen, die dazu dient, anhand des elektrischen Ausgangssignals N des Detektors 7 das Messsignal M zu erzeugen.

Die Energieversorgung des radiometrischen Messgeräts erfolgt ausschließlich über ein einziges an die Messgerätelektronik 15 angeschlossenes Leitungspaar 17, über die das Messgerät an eine übergeordnete Einheit anschließbar ist. Über dieses Leitungspaar 17 wird auch das von der Messgerätelektronik 15 generierte Messsignal M vom Messgerät zur Verfügung gestellt.

Hierzu wird vorzugsweise einer der beiden oben angegebenen Standards für 2-Draht Messgeräte eingesetzt, d.h. das Messgerät regelt entweder einen über das Leitungspaar 17 fließenden Strom auf einen Wert, der dem aktuellen Messergebnis entspricht, oder das Messgerät wird an eine Busleitung angeschlossen und das Messsignal M wird in Form eines Bussignals entsprechend einem der hierfür üblichen Standards, wie z.B. Profibus oder Foundation Fieldbus, ausgegeben.

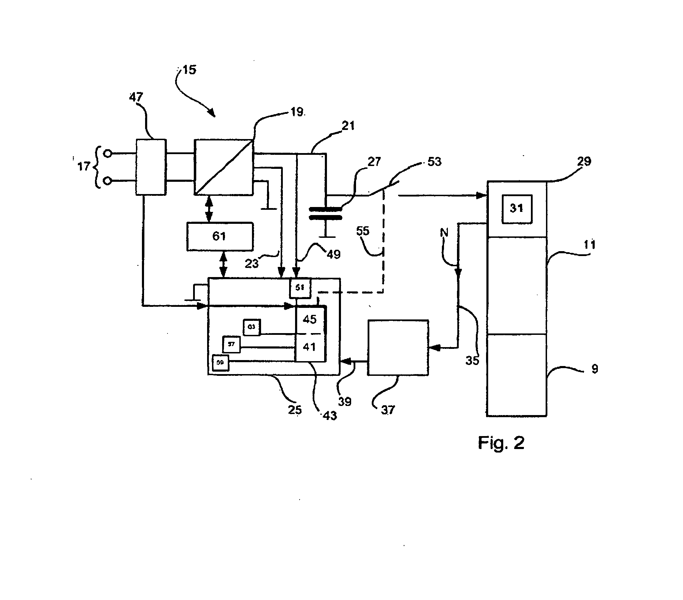

Fig. 2 zeigt einen Schaltplan des erfindungsgemäßen radiometrischen Messgeräts, in dem der Detektor 7, die daran angeschlossene Messgerätelektronik 15 und das Leitungspaar 17 dargestellt sind.

Die Messgerätelektronik 15 weist ein an das Leitungspaar 17 angeschlossenes Netzteil 19 auf, das über einen ersten Energieversorgungspfad 21 den Photomultiplier 11 und über einen zweiten Energieversorgungspfad 23 eine Mess- und Steuerschaltung 25 mit Energie versorgt. In den ersten Energieversorgungspfad 21 ist ein Energiespeicher 27 eingesetzt, der über das Netzteil 19 von dem Leitungspaar 17 mit Energie gespeist wird.

In dem dargestellten Ausführungsbeispiel ist der Energiespeicher 27 ein gegen Masse oder einen Schaltungsnullpunkt geschalteter Kondensator, der über den ersten Energieversorgungspfad 21 aufladbar ist.

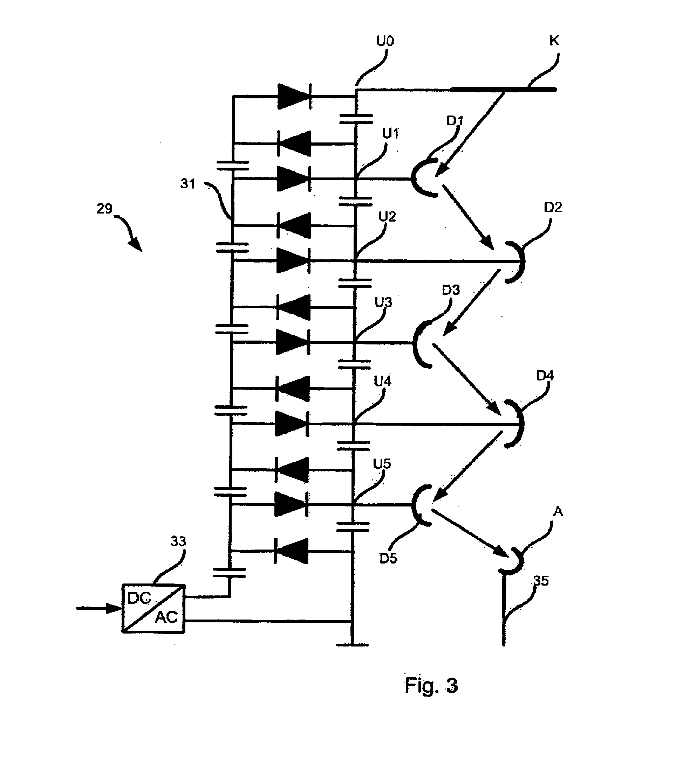

Für die Erzeugung der für den Betrieb des Photomultipliers 11 erforderlichen hohen Spannungen ist eine Hochspannungserzeugungsschaltung 29 vorgesehen, die die erforderlichen Spannungen mittels einer Hochspannungskaskade 31 generiert. Fig. 3 zeigt Ausführungsbeispiel hierzu. Die Hochspannungserzeugungsschaltung 29 weist eingangsseitig einen DC/AC Wandler 33 auf, der über einen zwischen dem Energiespeicher 27 und dem Netzteil 19 angeordneten Abgriff an den ersten Energieversorgungspfad 21 angeschlossen ist. Der DC/AC Wandler 33 generiert eine Wechselspannung mit der die Hochspannungskaskade 31 betrieben wird. Hochspannungskaskaden sind Schaltungen, die durch Vervielfältigung und Gleichrichtung einer Wechselspannung hohe Gleichspannungen erzeugen. Sie sind in der Literatur beispielsweise unter der Bezeichnung Cockcroft-Walton-Schaltung oder Villard-Vervielfacher-Schaltung bekannt und beruhen auf einer Villard Schaltung, welche hierzu mehrfach hintereinander geschaltet, also kaskadiert, wird. Jede der kaskadierten Villard Schaltungen umfasst zwei Kondensatoren und zwei Dioden, die in der dargestellten Weise miteinander verschaltet sind. Das Funktionsprinzip dieser Hochspannungkaskaden 31 ist aus der Literatur bekannt, und daher hier nicht im Detail beschrieben. Fig. 3 zeigt eine sechsstufige Hochspannungskaskade 31, die aus sechs kaskadierten Villard Schaltungen aufgebaut ist. An jeder Stufe ist ein Spannungsabgriff U₀, U₁, U₂, U₃, U₄, U₅ vorgesehen. Der oberste Spannungsabgriff U₀ ist mit einer Kathode K des Photomultipliers 11 verbunden, auf die im Messbetrieb die im Szintillator 9 durch die radioaktive Strahlung erzeugten Lichtblitze auftreffen. Die weiteren Spannungsabgriffe U₁, U₂, U₃, U₄, U₅ sind jeweils mit einer Dynode D1, D2, D3, D4, D5 des Photomultipliers 11 verbunden. Aus der Kathode K durch die Lichtimpulse herausgelöste Photoelektronen werden in den zwischen den Dynoden D1, D2, D3, D4, D5 anliegenden elektrischen Feldern beschleunigt und vervielfältigt. Anschließend treffen sie auf die der letzten Dynode D5 nachgeschaltete Anode A und fließen über eine an die Anode A angeschlossene analoge Impulsleitung 35 in Form von Strompulsen ab. Das analoge Ausgangssignal der Anode A bildet damit das analoge Ausgangssignal N des Detektors 7. Das Ausgangssignal N wird der Messgerätelektronik 15 über die analoge Impulsleitung 35 und eine dieser nachgeschaltete Triggerschaltung 37 zugeführt, die das analoge Ausgangssignal N digitalisiert und es über eine digitale Impulsleitung 39 in Form von Pulsen P einer digitalen Signalverarbeitung 41 zuführt. Die digitale Signalverarbeitung 41 ist in dem hier dargestellten Ausführungsbeispiel Bestandteil der Mess- und Steuerschaltung 25. Kernelement der Mess- und Steuerschaltung 25 ist vorzugsweise ein Mikrocontroller 43, der auch die Funktion der Signalverarbeitung 41 übernimmt.

Die Mess- und Steuerschaltung 25 umfasst eine Steuerung 45, die in Abhängigkeit von der im Messgerät über das Leitungspaar 17 und den Energiespeicher 27 zur Verfügung stehende Energie Messphasen auslöst, während denen das Messgerät die physikalische Messgröße misst.

Hierzu wird die im Gerät zur Verfügung stehende Energie erfasst. Dies geschieht beispielsweise über eine an das Leitungspaar 17 eingangsseitig angeschlossene Messschaltung 47, die den zur Verfügung stehenden Eingangsstrom und die Eingangsspannung misst, und das Ergebnis der Mess- und Steuerschattung 25 zur Verfügung stellt.

Alternativ oder zusätzlich hierzu kann die über das Leitungspaar 17 und den Energiespeicher 27 zur Verfügung stehende Gesamtenergie über eine Energiemessleitung 49 erfasst werden, über die die Mess- und Steuerschaltung 25 mit einem zwischen dem Netzteil 9 und dem Energiespeicher 27 in dem ersten Energieversorgungspfad 21 angeordneten Abgriff verbunden ist. Die an der Energiemessleitung 49 anliegende Spannung ist ein Maß für den Ladezustand des Energiespeichers 27, und wird über eine entsprechende in der Mess- und Steuerschaltung 25 integrierte Spannungsmessschaltung 51 quantitativ erfasst und der Steuerung 45 zur Verfügung gestellt.

Die Funktion der Steuerung 45 wird vorzugsweise ebenfalls von dem Mikrocontroller 43 der Mess- und Steuerschaltung 25 übernommen. Gemäß einer ersten Variante der Erfindung wird über die Messschaltung 47 die zur Verfügung stehende eingehende Energie gemessen, und die Steuerung 45 gibt in Abhängigkeit von der zur Verfügung stehenden eingehenden Energie Messphasen vor, während denen das radiometrische Messgerät misst. Während der Messpausen wird der Energiespeicher 27 aufgeladen. In diesem Fall wird die im Energiespeicher 27 zusätzlich zur eingehenden Energie zur Verfügung stehende Energie beispielsweise anhand von Strom und Spannung der eingehenden Energie und der Ladungs- und Entladungskennlinien des Energiespeichers 27 abgeleitet und bei der der Auslösung der Messphasen und der Bemessung der Dauer der Messphasen und der Messpausen berücksichtigt. Dabei weisen die Messphasen beispielsweise eine fest vorgegebene Dauer auf. Sie werden beispielsweise unmittelbar eingeleitet, sowie die eingehende Energie zusammen mit der im Energiespeicher 27 aktuell zur Verfügung stehenden hierfür ausreicht.

Gemäß einer zweiten Variante werden die Auslösung und die Dauer der Messphasen und der Messpausen anhand der über die Energiemessleitung 49 erfassten über das Leitungspaar 17 und den Energiespeicher 27 intern insgesamt zur Verfügung stehenden Gesamtenergie festgelegt. Auch hier weisen die Messphasen beispielsweise eine fest vorgegebene Dauer auf, und sie werden beispielsweise eingeleitet, wenn die eingehende Energie zusammen mit der im Energiespeicher 27 aktuell zur Verfügung stehenden hierfür ausreicht.

Gemäß einer dritten Variante werden die Messphasen und die Messpausen in Abhängigkeit von der im Energiespeicher 27 gespeicherten Energie festgelegt. Die gespeicherte Energie kann in dem dargestellten Ausführungsbeispiel beispielsweise anhand der über den Kondensator anliegenden Spannung abgeleitet werden, die über die Energiemessleitung 49 an der Mess- und Steuerschaltung 25 anliegt und mittels der Spannungsmessschaltung 51 gemessen wird. Liegt die gespeicherte Energie oberhalb eines vorgegebenen oberen Schwellenwerts, so leitet die Steuerung 45 eine Messphase ein. Die Dauer der Messphase kann entweder fest vorgegeben sein, oder an den Ladezustand des Energiespeichers 27 gekoppelt sein. Im zweiten Fall beendet die Steuerung 45 die Messphase, wenn die gespeicherte Energie einen vorgegebenen unteren Schwellenwert unterschreitet. Die Dauer der daran anschließenden Messpause wird durch die Zeit bestimmt, die für das erneute Aufladen des Energiespeichers 27 benötigt wird.

Die Steuerung 45 nimmt den Photomultiplier 11 ausschließlich während der Messphasen in Betrieb. Dies ist in dem dargestellten Ausführungsbeispiel durch einen in den ersten Energieversorgungspfad 21 zwischen den Energiespeicher 27 und die Hochspannungserzeugungsschaltung 29 eingesetzten Unterbrecherkontakt 53 realisiert, der von der Steuerung 45 über eine Steuerleitung 55 angesteuert wird. Während der Messphasen ist der Unterbrecherkontakt 53 geschlossen und der Photomultiplier 11 wird über die über das Leitungspaar 17 aktuell zur Verfügung stehende Energie und die im Energiespeicher 27 zur Verfügung stehende Energie mit Energie versorgt. Während der Messphase bewirkt die Verwendung der Hochspannungskaskade 31, dass nur sehr geringe Energieverluste auftreten, da in der Schaltung im Unterschied zu den eingangs genannten Widerstandsteilern praktisch keine Querströme fließen. Während der Messpausen ist die Hochspannungserzeugungsschaltung 29 und damit auch der Photomulitplier 11 ausgeschaltet und verbraucht keine Energie. In dieser Zeit wird der Energiespeicher 27 über die über das Leitungspaar 17 zur Verfügung stehende Energie aufgeladen. Steht wieder genügend Energie zur Verfügung kann die Steuerung 45 die nächste Messphase einleiten. Diese kann solange anhalten, bis die zur Verfügung stehende Energie unter einen vorgegebenen Grenzwert absinkt. Dann kann durch die Öffnung des Unterbrecherkontakts 53 die nächste Messpause ausgelöst werden. Die Hochspannungskaskade 31 bietet den Vorteil, dass sie sehr schnell ein- und ausgeschaltet werden kann, da sie nur sehr geringe interne Kapazitäten aufweist.

Zur weiteren Energieeinsparung wird der Mikrocontroller 43 während der Messpausen vorzugsweise ausgeschaltet, oder mit einer reduzierten Taktrate betrieben.

Während der Messphasen bestimmt die digitale Signalverarbeitung 41 anhand der eingehenden Pulse P die physikalische Messgröße. Hierzu wird eine Impulsrate der eingehenden Pulse P bestimmt, die proportional zur Strahlungsintensität und damit zur physikalischen Messgröße ist. Die Impulsrate ist die Anzahl der pro Zeiteinheit eingehenden Pulse P, und wird beispielsweise mittels eines Zählers 57 und einer internen Uhr 59 im Mikrocontroller 43 bestimmt.

Vorzugsweise wird die Dauer der Messphasen derart bemessen, dass während einer Messphase mindestens eine vorgegebene Mindestanzahl von Pulsen P eingeht und zur Bestimmung der Impulsrate zur Verfügung steht. Hierdurch lässt sich ein bei der Bestimmung der Impulsrate auftretender statistischer Fehler begrenzen.

Die Messgerätelektronik 25 generiert ein der gemessenen Strahlungsintensität entsprechendes Messsignal M und stellt dieses über das Leitungspaar 17 zur Verfügung. Dies erfolgt in dem dargestellten Ausführungsbeispiel über einen zwischen das Netzteil 9 und die Mess- und Steuerelektronik 25 eingefügten Übertrager 61, wie z.B. einem Modern.

Gemäß einer ersten Variante wird das Messsignal M wie oben beschrieben in Form eines Bussignals ausgegeben und der Übertrager 61. ist ein Busmoden, der die Kommunikation über das als Datenbusleitung ausgebildete Leitungspaar 17 übernimmt. Zugleich erfolgt natürlich auch die Energieversorgung des gesamten Geräts über die Datenbusleitung.

Gemäß einer zweiten Variante der Erfindung ist das Messsignal M ein Signalstrom I, der abhängig vom Messwert zwischen einem Minimalstrom Iₘᵢₙ und einem Maximalstrom Iₘₐₓ variiert. In diesem Fall stellt das Netzteil 9 gesteuert durch den Übertrager 61 einen über das Leitungspaar 17 fließenden Signalstrom I ein, der dem Messwert der zu messenden physikalischen Messgröße entspricht. Dieser Signalstrom I wird von der an das Messgerät angeschlossenen hier nicht dargestellten übergeordneten Einheit bereitgestellt, und liefert die Energiezufuhr, mit der das gesamte Messgerät betrieben wird.

Bei dieser Variante wird die Dauer der Messphasen vorzugsweise an den das Messsignal wiedergebenden Signalstrom I gekoppelt. Dabei variiert der Signalstrom I abhängig vom Messwert zwischen dem Minimalstrom I ₘᵢₙ und dem Maximalstrom Iₘₐₓ, und die Dauer der Messphasen nimmt mit ansteigendem Signalstrom I zu.

Vorzugsweise wird auch das Verhältnis der Dauer der Messphasen zu der Dauer der Messpausen an den Signalstrom I angepasst, so dass die Dauer der Messphasen im Verhältnis zur Dauer der Messpausen mit ansteigendem Signalstrom I zunimmt.

Das Verhältnis der Dauer der Messphasen bezogen auf die Dauer der Messpausen wird als duty cycle bezeichnet. Dieses Verhältnis wird in Abhängigkeit von der zur Verfügung stehenden Energie mittels der Steuerung 45 variiert. Typischer Weise liegt der duty cycle abhängig von der über das Leitungspaar 17 zur Verfügung stehenden Energie zwischen 20 % und 100 %.

Sofern genügend Energie zur Verfügung steht, wird das Messgerät vorzugsweise im Dauermessbetrieb mit einem duty cycle von 100 % betrieben. Hierzu wird beispielsweise derart Verfahren, dass die zur Verfügung stehende Eingangspannung z.B. mit der Messschaltung 47 gemessen wird, und mit einer für einen Dauerbetrieb des Messgeräts erforderlichen Mindestspannung verglichen wird. Übersteigt die Eingangsspannung die für den Dauerbetrieb erforderliche Mindestspannung, so löst die Steuerung 45 eine Messphase aus, die sie erst dann beendet, wenn die Eingangsspannung unter die Mindestspannung absinkt.

Jedes radiometrische Messgerät weist einen Messbereich für die zu messende physikalische Messgröße auf, für den das Messgerät ausgelegt ist. Bei der Füllstandsmessung ist der Messbereich beispielsweise durch einen minimalen Füllstand Lₘᵢₙ und einen maximalen Füllstand Lₘₐₓ begrenzt. Bei einer klassischen Füllstandsmessung wird die radioaktive Strahlung durch das Füllgut 1 im Behälter 3 absorbiert. Damit trifft bei einem vollen Behälter 3 eine geringe Strahlungsintensität auf den Detektor 7, während bei einem leeren Behälter 3 eine deutlich höhere Strahlungsintensität auf den Detektor 7 trifft.

Bei der Dichtemessung ist der Messbereich z.B. durch eine minimale und eine maximale Dichte begrenzt. Hier gilt analog, dass bei Füllgütern mit hoher Dichte eine geringere Strahlungsintensität auf den Detektor 7 trifft als bei Füllgütern mit einer niedrigeren Dichte.

Vorzugsweise wird bei der Ausgabe des Messergebnisses derart vorgegangen, dass dem Minimalstrom Iₘᵢₙ derjenige Messwert zugeordnet ist, bei dem innerhalb des vorgegebenen Messbereichs des Messgeräts die höchste Strahlungsintensität vorliegt. Bezogen auf den eingangs beschriebenen Standard für 2-Draht Messgeräte heißt das, dass beispielsweise dem minimalen Füllstand Lₘᵢₙ ein Stromwert von 4 mA zugeordnet wird und dem maximalen Füllstand Lₘₐₓ ein Stromwert von 20 mA zugeordnet wird.

Dies bietet den Vorteil, dass zur Messung der niedrigeren Strahlungsintensitäten mehr Energie zur Verfügung steht als zur Messung höherer Strahlungsintensitäten. Entsprechend können die niedrigeren Strahlungsintensitäten während längerer Messphasen bzw. mit einem höheren duty cycle gemessen werden, als die höheren Strahlungsintensitäten.

Die zu messende Impulsrate ist bei hohen Strahlungsintensitäten höher als bei niedrigen. Entsprechend ist ein bei der Bestimmung der Impulsrate auftretender statistischer Messfehler bei hohen Strahlungsintensitäten geringer als bei niedrigen Strahlungsintensitäten. Die statistischen Schwankungen der Impulsrate können zusätzlich durch spezielle Digitalfilter, wie z.B. Kalmanfilter oder Medianfilter, reduziert werden. Bei dem in Fig. 2 dargestellten Ausführungsbeispiel ist hierzu ein der Signalverarbeitung 41 zugeordneter Digitalfilter 63 vorgesehen. Es werden mehrere Einzelwerte nacheinander gemessener Impulsraten als Eingangswerte in die Filterfunktion eingegeben. Das Filter gewichtet die Einzelwerte unterschiedliche stark und bestimmt danach den Mittelwert oder den mittleren Wert der Gesamtheit der Einzelwerte. Je länger die Messphasen andauern, umso höher kann die Anzahl der Einzelwerte gewählt werden, die für die Bestimmung der Impulsrate herangezogen werden. Hierdurch wird der statistische Fehler reduziert. Dieser positive Effekt ist umso größer, je geringer die zu messende Impulsrate ist.

Bei erfindungsgemäßen radiometrischen Messgeräten, bei denen das Messsignal M ein Signalstrom I ist, der abhängig vom Messwert zwischen einem Minimalstrom Iₘᵢₙ und einem Maximalstrom Iₘₐₓ variiert, wird der Signalstrom I beim Einschalten des Messgeräts vorzugsweise auf den Maximalstrom Iₘₐₓ geregelt. Hierdurch wird der Einschaltvorgang, bei dem auch der Energiespeicher 27 aufgeladen wird, so kurz wie möglich gehalten.

Im Kalibrierbetrieb wird der Signalstrom I vorzugsweise auf einen Wert von mehr als 20,5 mA, insb. auf 22 mA, geregelt. Ein Stromwert von 22 mA ist für 2-Draht Messgeräte standardmäßig als Fehlerstrom vorgegebenen, und bietet bei dem erfindungsgemäßen 2-Draht Gerät den Vorteil, dass im Gerät während der Kalibration viel Energie zur Verfügung steht.

Beim Vorliegen eines Gerätefehlers, wird der Signalstrom auf einen ebenfalls standardmäßig hierfür vorgegebene Fehlerwert von weniger als 3,8 mA, insb. auf 3,6 mA, geregelt. Erfindungsgemäß bewirkt die Steuerung 45 während des Vorliegens eines Gerätefehlers eine für die Dauer des Vorliegens des Gerätefehlers anhaltende Messpause.

**Tabelle 1**

| | |
|---|---|
| 1 | Füllgut |
| 3 | Behälter |
| 5 | radioaktiver Strahler |
| 7 | Detektor |
| 9 | Szintillator |
| 11 | Photomultiplier |
| 13 | Schutzrohr |
| 15 | Messgerätelektronik |
| 17 | Leitungspaar |
| 19 | Netzteil |
| 21 | erster Energieversorgungspfad |
| 23 | zweiter Energieversorgungspfad |
| 25 | Mess- und Steurschaltung |
| 27 | Energiespeicher |
| 29 | Hochspannungserzeugungsschaltung |
| 31 | Hochspannungskaskade |
| 33 | DC/AC Wandler |
| 35 | analoge Impulsleitung |
| 37 | Triggerschaltung |
| 39 | digitale Impulsleitung |
| 41 | digitale Signalverarbeitung |
| 43 | Mikrocontroller |
| 45 | Steuerung |
| 47 | Messschaltung |
| 49 | Energiemessleitung |
| 51 | Spannungsmessschaltung |
| 53 | Unterbrecherkontakt |
| 55 | Steuerleitung |
| 57 | Zähler |
| 59 | Uhr |
| 61 | Übertrager |
| 63 | digitales Filter |

## Patentansprüche

1. Radiometrisches Messgerät zur Messung einer physikalischen Messgröße eines in einem Behälter (3) befindlichen Füllguts (1) und zur Ausgabe eines Messsignals (M), das einem gemessenen Messwert der physikalischen Messgröße entspricht,
- das über ein einziges Leitungspaar (17) verfügt, über das die Energieversorgung des gesamten Messgeräts erfolgt, und über das die Übertragung des Messsignals erfolgt, mit
- einem radioaktiven Strahler (5), der im Betrieb radioaktive Strahlung durch den Behälter (3) sendet,
- einem Detektor (7) mit einem Szintillator (9) und einem Photomultplier (11), der dazu dient eine durch den Behälter (3) hindurchdringende von der zu messenden physikalischen Messgröße abhängige Strahlungsintensität zu detektieren und in ein elektrisches Ausgangssignal (N) umzuwandeln,
- einer Messgerätelektronik (15), die dazu dient anhand des elektrischen Ausgangssignals (N) des Detektors (7) das Messsignal (M) zu erzeugen und über das Leitungspaar (17) zur Verfügung zu stellen,
- einem über das Leitungspaar (17) gespeisten Energiespeicher (27),
- einer Steuerung (45),
-- die in Abhängigkeit von einer über das Leitungspaar (17) und den Energiespeicher (26) zur Verfügung stehenden Energie Messphasen auslöst, während denen das Messgerät die physikalische Messgröße misst, und
-- die den Photomultiplier (11) ausschließlich während der Messphasen in Betrieb nimmt, wobei für den Betrieb des Photomultipliers (11) erforderliche hohe Spannungen während der Messphasen mittels einer Hochspannungskaskade (31) erzeugt werden.

2. Radiometrisches Messgerät nach Anspruch 1, bei dem eine an das Leitungspaar (17) angeschlossenen Messschaltung (47) vorgesehen ist, die einen zur Verfügung stehenden Eingangsstrom und eine Eingangsspannung misst.

3. Radiometrisches Messgerät nach Anspruch 1, bei dem eine Energiemessleitung (49) vorgesehen ist, über die die im Inneren des Messgeräts über das Leitungspaar (17) und den Energiespeicher (27) zur Verfügung stehend Energie erfasst wird.

4. Radiometrisches Messgerät nach Anspruch 1, bei dem ein Ladezustand des Energiespeichers (27) erfasst wird, und die Messphasen in Abhängigkeit vom Ladezustand des Energiespeichers (27) ausgelöst werden.

5. Radiometrisches Messgerät nach Anspruch 1, bei dem die Messgerätelektronik (15) einen Mikrocontroller (43) umfasst, der während der Messpausen ausgeschaltet ist oder mit einer reduzierten Taktrate betrieben wird.

6. Radiometrisches Messgerät nach Anspruch 1, bei dem
- das Messsignal (M) ein Signalstrom (I) ist, der abhängig vom Messwert zwischen einem Minimalstrom (Iₘᵢₙ) und einem Maximalstrom (Iₘₐₓ) variiert, wobei
- dem Minimalstrom (Iₘᵢₙ) derjenige Messwert zugeordnet ist, bei dem innerhalb eines vorgegebenen Messbereichs des Messgeräts die höchste Strahlungsintensität vorliegt.

7. Radiometrisches Messgerät nach Anspruch 1, bei dem
- das Messsignal (M) ein Signalstrom (I) ist, der abhängig vom Messwert zwischen einem Minimalstrom (Iₘᵢₙ) und einem Maximalstrom (Iₘₐₓ) variiert, und
- das Verhältnis der Dauer der Messphasen zur Dauer der Messpausen mit ansteigendem Signalstrom (I) zunimmt.

8. Radiometrisches Messgerät nach Anspruch 1, bei dem
- das Messsignal (M) ein Signalstrom (!) ist, der abhängig vom Messwert zwischen einem Minimalstrom (Iₘᵢₙ) und einem Maximalstrom (Iₘₐₓ) variiert, und
- die Dauer der Messphasen mit ansteigendem Signalstrom (I) zunimmt.

9. Radiometrisches Messgerät nach Anspruch 1, bei dem das Messsignal (M) ein Bussignal ist.

10. Radiometrisches Messgerät nach Anspruch 1, bei dem
- ein Zähler (57) vorgesehen ist, der vom Photomultiplier (11) erzeugte Pulse (P) zählt, und
- die Dauer der Messphasen derart bemessen ist, das während einer Messphase mindestens eine vorgegebene Mindestanzahl von Pulsen (P) erzeugt wird.

11. Messgerät nach Anspruch 1, bei dem das Verhältnis der Dauer der Messphasen zur Dauer der Messpausen abhängig von der zur Verfügung stehenden Energie zwischen 20% und 100% liegt.

12. Verfahren zum Betrieb eines radiometrischen Messgerätes zur Messung einer physikalischen Messgröße eines in einem Behälter befindlichen Füllguts und zur Ausgabe eines Messsignals, das einem gemessenen Messwert der physikalischen Messgröße entspricht, mit den folgenden Schritten:
- Bestrahlung eines das Füllgut enthaltenen Behälters mit radioaktiver Strahlung
- Detektion der durch den Behälter durchdringenden, von der zu messenden physikalischen Messgröße abhängigen, Strahlungsintensität mit einem Szintillator und einem Photomultiplier sowie Umwandlung der detektierten Strahlungsintensität in ein elektrisches Ausgangssignal,
- Erzeugung des Messsignals anhand des elektrischen Ausgangssignals mittels einer Messgeräteelektronik
- Übertragung des Messsignals mit Hilfe eines Leitungspaars,
wobei das Leitungspaar das einzige Leitungspaar des Messgeräts ist, über welches auch die Energieversorgung des gesamten Messgeräts erfolgt, und wobei das Messgerät die physikalische Messgröße während Messphasen misst, die von einer Steuerung in Abhängigkeit von einer über das Leitungspaar und einen über das Leitungspaar gespeisten Energiespeicher zur Verfügung stehenden Energie ausgelöst werden, und
wobei der Photomultiplier ausschließlich während der Messphasen in Betrieb genommen wird und
wobei die für den Photomultiplier erforderlichen hohen Spannungen mittels einer Hochspannungskaskade erzeugt werden.

13. Verfahren zum Betrieb eines radiometrischen Messgeräts nach Anspruch 12, bei dem das Messsignal (M) ein Signalstrom (I) ist, der abhängig vom Messwert zwischen einem Minimalstrom (Iₘᵢₙ) und einem Maximalstrom (Iₘₐₓ) variiert, und der Signalstrom (I) beim Einschalten des Messgeräts auf den Maximalstrom (Iₘₐₓ) geregelt wird.

14. Verfahren zum Betrieb eines radiometrischen Messgeräts nach Anspruch 12, bei dem das Messsignal (M) ein Signalstrom (I) ist, der abhängig vom Messwert zwischen einem Minimalstrom (Iₘᵢₙ) und einem Maximalstrom (Iₘₐₓ) variiert, und der Signalstrom (I) im Kalibrierbetrieb auf einen Wert von mehr als 20,5 mA, insb. auf 22 mA, geregelt wird.

15. Verfahren zum Betrieb eines radiometrischen Messgeräts nach Anspruch 12, bei dem
- das Messsignal (M) ein Signalstrom (I) ist, der abhängig vom Messwert zwischen einem Minimalstrom (Iₘᵢₙ) und einem Maximalstrom (Iₘₐₓ) variiert,
- der Signalstrom (I) beim vorliegen eines Gerätefehlers auf einen Fehlerwert von weniger als 3,8 mA, insb. auf 3,6 mA, geregelt wird, und
- die Steuerung (45) während des Vorliegens eines Gerätefehlers eine für die Dauer des Vorliegens des Gerätefehlers anhaltende Messpause bewirkt.

16. Verfahren zum Betrieb eines Messgerät nach Anspruch 12, bei dem
- die zur Verfügung stehende Eingangspannung gemessen wird,
- die Eingangsspannung mit einer für einen Dauerbetrieb des Messgeräts erforderlichen Mindestspannung verglichen wird, und
- die Steuerung (45) beim Überschreiten der Mindestspannung eine Messphase auslöst, die sie erst dann beendet, wenn die Eingangsspannung unter die Mindestspannung absinkt.

## Claims

1. Radiometric measuring device designed for the measurement of a physical variable of a product (1) located in a vessel (3), and designed to output a measuring signal (M) that corresponds to a measured value of the physical measured variable,
- which has a single conductor pair (17) via which energy is supplied to the entire measuring device and via which the measuring signal is transmitted, with
- a radioactive emitter (5) that emits radioactive radiation through the vessel (3) during operation,
- a detector (7) with a scintillator (9) and a photomultiplier (11) which is used to detect a radiation intensity that penetrates the vessel (3) and is dependent on the physical measured variable under measurement, and to convert this to an electrical output signal (N),
- a measuring device electronics system (15) which is used to generate the measuring signal (M) using the electrical output signal (N) of the detector (7) and make this available via the conductor pair (17),
- an energy accumulator (27) fed via the conductor pair (17),
- a controller (45),
-- which, depending on the energy provided via the conductor pair (17) and the accumulator, triggers measuring phases during which the measuring device measures the physical measured variable,
and
-- which puts the photomultiplier (11) into service solely during the measuring phases, wherein high voltages that are required to operate the photomultiplier (11) are generated during the measuring phases by means of a high voltage cascade (31).

2. Radiometric measuring device as claimed in Claim 1, wherein a measuring circuit (47) connected to the conductor pair (17) is provided, said measuring circuit measuring an input current and an input voltage provided.

3. Radiometric measuring device as claimed in Claim 1, wherein an energy measuring cable (49) is provided via which the energy provided inside the measuring device via the conductor pair (17) and the energy accumulator (27) is measured.

4. Radiometric measuring device as claimed in Claim 1, wherein a charge state of the energy accumulator (27) is recorded and the measuring phases are triggered depending on the charge state of the energy accumulator (27).

5. Radiometric measuring device as claimed in Claim 1, wherein the measuring device electronics system (15) has a microcontroller (43) which is switched off during the pauses in measurement or is operated at a reduced clock speed.

6. Radiometric measuring device as claimed in Claim 1, wherein
- the measuring signal (M) is a signal current (I) which varies between a minimum current (Iₘᵢₙ) and a maximum current (Iₘₐₓ) depending on the measured value, wherein
- the minimum current (Iₘᵢₙ) is assigned the measured value at which the highest radiation intensity is provided within a specified measuring range of the measuring device.

7. Radiometric measuring device as claimed in Claim 1, wherein
- the measuring signal (M) is a signal current (I) which varies between a minimum current (Iₘᵢₙ) and a maximum current (Iₘₐₓ) depending on the measured value,
and
- the ratio of the length of the measuring phases to the length of the pauses in measurement increases as the signal current (I) increases.

8. Radiometric measuring device as claimed in Claim 1, wherein
- the measuring signal (M) is a signal current (I) which varies between a minimum current (Iₘᵢₙ) and a maximum current (Iₘₐₓ) depending on the measured value,
and
- the length of the measuring phases increases as the signal current (I) increases.

9. Radiometric measuring device as claimed in Claim 1, wherein the measuring signal (M) is a bus signal.

10. Radiometric measuring device as claimed in Claim 1, wherein
- a meter (57) is provided that counts the pulses (P) generated by the photomultiplier (11), and
- the length of the measuring phases is such that at least a prespecified minimum number of pulses (P) is generated during a measuring phase.

11. Measuring device as claimed in Claim 1, wherein the ratio of the length of measuring phases to the length of pauses in measurement is between 20% and 100% depending on the energy provided.

12. Procedure for operating a radiometric measuring device for measuring a physical measured variable of a product located in a vessel, and for outputting a measuring signal that corresponds to a measured value of the physical measured variable, said procedure comprising the following steps:
- irradiation of a vessel containing the product with radioactive radiation
- detection of the radiation intensity that penetrates the vessel and is dependent on the physical measured variable under measurement with a scintillator and a photomultiplier, and the conversion of the detected radiation intensity to an electrical output signal
- generation of the measuring signal on the basis of the electrical output signal by means of a measuring device electronics system
- transmission of the measuring signal using a pair of conductors, wherein the conductor pair is the only pair of conductors of the measuring device via which energy is also provided for the entire measuring device, and wherein the measuring device measures the physical measured variable during measuring phases which are triggered by a controller depending on the energy provided by the conductor pair and by an accumulator fed by the conductor pair, and wherein the photomultiplier is only put into operation during the measuring phases,and
wherein the high voltages required for the photomultiplier are generated by means of a high voltage cascade.

13. Procedure designed to operate a radiometric measuring device as claimed in Claim 12, wherein the measuring signal (M) is a signal current (I), which varies between a minimum current (Iₘᵢₙ) and a maximum current (Iₘₐₓ) depending on the measured value, and wherein the signal current (I) is regulated to the maximum current (Iₘₐₓ) when the measuring device is switched on.

14. Procedure designed to operate a radiometric measuring device as claimed in Claim 12, wherein the measuring signal (M) is a signal current (I), which varies between a minimum current (Iₘᵢₙ) and a maximum current (Iₘₐₓ) depending on the measured value, and wherein the signal current (I) is regulated to a value of more than 20.5 mA, notably to 22 mA, during calibration mode.

15. Procedure designed to operate a radiometric measuring device as claimed in Claim 12, wherein
- the measuring signal (M) is a signal current (I), which varies between a minimum current (Iₘᵢₙ) and a maximum current (Iₘₐₓ) depending on the measured value,
- when a device error occurs, the current signal (I) is regulated to an error value of less than 3.8 mA, notably to 3.6 mA, and
- when a device error is present, the controller (45) initiates a pause in the measurement that lasts as long as the device error is present.

16. Procedure designed to operate a radiometric measuring device as claimed in Claim 12, wherein
- the input voltage provided is measured,
- the input voltage is compared against a minimum voltage that is required for the continuous operation of the measuring device, and
- when the minimum voltage is exceeded the controller (45) triggers a measuring phase which only then ends when the input voltage falls below the minimum voltage level.

## Revendications

1. Appareil de mesure radiométrique destiné à la mesure d'une grandeur physique d'un produit (1) se trouvant dans un réservoir (3) et destiné à la sortie d'un signal de mesure (M), qui correspond à la valeur mesurée de la grandeur physique,
- qui dispose d'une unique paire de conducteurs (17), par l'intermédiaire de laquelle intervient l'alimentation en énergie de l'appareil de mesure complet, et par l'intermédiaire de laquelle intervient la transmission du signal de mesure, avec
- un émetteur radioactif (5), qui émet en fonctionnement un rayonnement radioactif à travers le réservoir (3),
- un détecteur (7) avec un scintillateur (9) et un photomultiplicateur (11), qui sert à détecter une intensité de rayonnement dépendant de la grandeur physique à mesurer et traversant le réservoir (3), et à le convertir en un signal de sortie électrique (N),
- une électronique d'appareil de mesure (15), qui sert, sur la base du signal de sortie électrique (N) du détecteur (7), à générer le signal de mesure (M) et à le mettre à disposition par l'intermédiaire de la paire de conducteurs (17),
- un accumulateur d'énergie (27) alimenté par l'intermédiaire de la paire de conducteurs (17),
- un système de commande (45),
-- qui déclenche en fonction d'une énergie mise à disposition par l'intermédiaire de la paire de conducteurs (17) et de l'accumulateur d'énergie (26) des phases de mesure, pendant lesquelles l'appareil mesure la grandeur physique,
et
-- qui met en service le photomultiplicateur (11) exclusivement pendant les phases de mesure, des tensions élevées nécessaires pour le fonctionnement du photomultiplicateur (11) étant générées pendant les phases de mesure au moyen d'une cascade haute tension (31).

2. Appareil de mesure radiométrique selon la revendication 1, pour lequel est prévu un circuit de mesure (47) raccordé à la paire de conducteurs (17), lequel circuit mesure un courant d'entrée et une tension d'entrée mis à disposition.

3. Appareil de mesure radiométrique selon la revendication 1, pour lequel est prévu un câble de mesure d'énergie (49), par l'intermédiaire duquel est mesurée l'énergie mise à disposition à l'intérieur de l'appareil par l'intermédiaire de la paire de conducteurs (17) et de l'accumulateur d'énergie (27).

4. Appareil de mesure radiométrique selon la revendication 1, pour lequel est détecté un état de charge de l'accumulateur d'énergie (27), et les phases de mesure sont déclenchées en fonction de l'état de charge de l'accumulateur d'énergie (27).

5. Appareil de mesure radiométrique selon la revendication 1, pour lequel l'électronique d'appareil de mesure (15) comprend un microcontrôleur (43), qui est désactivé pendant les pauses de mesure ou est utilisé avec une fréquence d'horloge réduite.

6. Appareil de mesure radiométrique selon la revendication 1, pour lequel
- le signal de mesure (M) est un courant de signal (I), qui varie en fonction de la valeur mesurée entre un courant minimal (Iₘᵢₙ) et un courant maximal (Iₘₐₓ), pour lequel
- est affectée au courant minimal (Iₘᵢₙ) la valeur mesurée pour laquelle est obtenue l'intensité de rayonnement maximale au sein de la gamme de mesure prédéfinie de l'appareil de mesure.

7. Appareil de mesure radiométrique selon la revendication 1, pour lequel
- le signal de mesure (M) est un courant de signal (I), qui varie en fonction de la valeur mesurée entre un courant minimal (Iₘᵢₙ) et un courant maximal (Iₘₐₓ),
et
- le rapport entre la durée des phases de pause et la durée des phases de mesure augmente avec un courant de signal (I) croissant.

8. Appareil de mesure radiométrique selon la revendication 1, pour lequel
- le signal de mesure (M) est un courant de signal (I), qui varie en fonction de la valeur mesurée entre un courant minimal (Iₘᵢₙ) et un courant maximal (Iₘₐₓ),
et
- la durée des phases de mesure augmente avec un courant de signal (I) croissant.

9. Appareil de mesure radiométrique selon la revendication 1, pour lequel le signal de mesure (M) est un signal de bus.

10. Appareil de mesure radiométrique selon la revendication 1, pour lequel
- est prévu un compteur (57), qui compte les impulsions générées par le photomultiplicateur (11), et
- la durée des phases de mesure est adaptée de telle manière que pendant la phase de mesure est généré au moins un nombre minimum prédéfini d'impulsions (P).

11. Appareil de mesure selon la revendication 1, pour lequel le rapport entre la durée des phases de mesure et la durée des pauses de mesure se situe, en fonction de l'énergie disponible, entre 20 % et 100 %.

12. Procédé destiné à l'exploitation d'un appareil de mesure radiométrique destiné à la mesure d'une grandeur physique d'un produit se trouvant dans un réservoir et destiné à la sortie d'un signal de mesure, qui correspond à une valeur mesurée de la grandeur physique, avec les étapes suivantes :
- irradiation d'un réservoir contenant le produit avec un rayonnement radioactif
- détection de l'intensité de rayonnement dépendant de la grandeur physique à mesurer et traversant le réservoir, à l'aide d'un scintillateur et d'un photomultiplicateur, ainsi que conversion de l'intensité de rayonnement en un signal de sortie électrique
- génération du signal de mesure sur la base du signal de sortie électrique au moyen d'une électronique d'appareil de mesure
- transmission du signal de mesure à l'aide d'une paire de conducteurs, la paire de conducteurs étant l'unique paire de conducteurs de l'appareil de mesure, paire par l'intermédiaire de laquelle intervient également l'alimentation en énergie de l'appareil de mesure complet, et l'appareil de mesure mesurant la grandeur physique pendant les phases de mesure, qui sont déclenchées par un système de commande en fonction d'une énergie mise à disposition par l'intermédiaire de la paire de conducteurs et par l'intermédiaire de l'accumulateur d'énergie alimenté via la paire de conducteurs, et
le photomultiplicateur étant mis en service exclusivement pendant les phases de mesure, et
les tensions élevées nécessaires pour le photomultiplicateur étant générées au moyen d'une cascade haute tension.

13. Procédé destiné à l'exploitation d'un appareil de mesure radiométrique selon la revendication 12, pour lequel le signal de mesure (M) est un courant de signal (I), qui varie en fonction de la valeur mesurée entre un courant minimal (Iₘᵢₙ) et un courant maximal (Iₘₐₓ), et le courant de signal (I) est réglé au courant maximal (Iₘₐₓ) lors de l'enclenchement de l'appareil de mesure.

14. Procédé destiné à l'exploitation d'un appareil de mesure radiométrique selon la revendication 12, pour lequel le signal de mesure (M) est un courant de signal (I), qui varie en fonction de la valeur mesurée entre un courant minimal (Iₘᵢₙ) et un courant maximal (Iₘₐₓ), et le courant de signal (I) est réglé, en mode d'étalonnage, à une valeur supérieure à 20,5 mA, notamment à 22 mA.

15. Procédé destiné à l'exploitation d'un appareil de mesure radiométrique selon la revendication 12, pour lequel
- le signal de mesure (M) est un courant de signal (I), qui varie en fonction de la valeur mesurée entre un courant minimal (Iₘᵢₙ) et un courant maximal (Iₘₐₓ),
- le courant de signal (I) est réglé, en présence d'une erreur de l'appareil, à une valeur d'erreur inférieure à 3,8 mA, notamment à 3,6 mA, et
- le système de commande (45) déclenche en présence d'une erreur de l'appareil une pause de mesure active pendant la durée de la présence de l'erreur de l'appareil.

16. Procédé destiné à l'exploitation d'un appareil de mesure selon la revendication 12, pour lequel
- la tension d'entrée mise à disposition est mesurée,
- la tension d'entrée est comparée avec une tension minimale nécessaire pour un fonctionnement permanent de l'appareil de mesure, et
- le système de commande (45) déclenche, en cas de dépassement de la tension minimale, une phase de mesure qui n'est terminée que lorsque la tension d'entrée chute sous la tension minimale.
